# DEMANDE DE BREVET EUROPEEN

(11) **EP 1 026 479 A1**
(43) Date de publication de la demande: **09.08.2000**
(21) Numéro de dépôt: 00400230.9
(22) Date de dépôt: 28.01.2000
(51) Int. Cl.: G01F 1/08, G01F 1/075

(54) **Compteur de liquide à jet unique**

(30) Priorité: 02.02.1999 FR 9901171
(71) Demandeur: Societe Anonyme de Production de Procédés de Comptage de l'Eau et Autres Liquides, SAPPEL, 68300 Saint Louis (FR)
(72) Inventeur: Meister, Gilles, 68300 Saint Louis (FR)
(74) Mandataire: Dawidowicz, Armand

(57) **Abrégé**

L'invention concerne un compteur de liquide à jet unique du type comportant un organe moteur tel qu'une turbine (1) transmettant son mouvement à un totalisateur par l'intermédiaire d'un mécanisme de transmission constitué d'un axe dont une extrémité est solidaire en rotation de l'organe moteur (1) et dont l'autre extrémité est engagée dans une chambre, ménagée dans un boîtier (2) renfermant un train de pignons et un axe d'entraînement du totalisateur, au travers d'un orifice ménagé dans la cloison (6) dudit boîtier (2), ladite extrémité comportant un pignon coopérant avec un pignon monté sur l'axe d'entraînement du totalisateur, comportant des moyens de protection (10) dudit axe (4).

L'invention consiste en ce que lesdits moyens de protection sont agencés pour empêcher le passage de particules solides contenues dans le liquide au travers de l'orifice (5) ménagé dans la cloison (6) du boîtier (2) vers la chambre (3) renfermant le mécanisme de transmission, en définissant une zone protégée de moindre turbulence entourant ledit axe (4) au voisinage de l'orifice (5) et favorisant la retombée sous l'effet de leur gravité desdites particules qui perdent leur énergie cinétique initiale au fur et à mesure de leur course vers l'orifice (5) de la cloison (6).

## Description

La présente invention concerne un compteur de liquide à jet unique du type comportant un organe moteur tel qu'une turbine transmettant son mouvement à un totalisateur par l'intermédiaire d'un mécanisme de transmission constitué d'un axe dont une extrémité est solidaire en rotation de la turbine et dont l'autre extrémité est engagée au travers d'un orifice ménagé dans la cloison d'un boîtier renfermant un train de pignons et un axe d'entraînement du totalisateur, ladite extrémité comportant un pignon coopérant avec un pignon porté par l'axe d'entraînement du totalisateur.

Un tel compteur de liquide comportant un organe moteur placé dans l'axe de déplacement de la veine liquide à mesurer tel qu'une turbine est appelé à 〈〈 jet unique 〉〉 dans la mesure où le liquide qui le traverse et dont il mesure le volume vient frapper en un seul jet cette turbine. En conséquence, la turbine se trouve disposée dans une zone de passage du liquide, appelée chambre de mesure, où règnent de fortes turbulences du fait du mouvement du jet de liquide et du brassage des pales de ladite turbine, en particulier le liquide présentant un mouvement rotatif.

De manière habituelle, le totalisateur actionne un indicateur généralement composé de tambours numériques, par démultiplication d'un train de pignons.

Les pignons du train de pignons permettant la transmission de la rotation de la turbine au totalisateur se trouvent logés dans un boîtier et se trouvent donc dans une zone immergée dite noyée, le liquide passant au travers de l'orifice de la cloison du boîtier. Les pignons sont cependant isolés de la zone de turbulence de la chambre de mesure par la cloison du boîtier et se trouvent, par conséquent, dans une zone exempte de turbulence.

Les liquides, dont le volume est mesuré, peuvent renfermer des particules solides. Dans le cas de l'eau, ces particules solides peuvent être abrasives telles que du sable. La turbulence du liquide au niveau de la turbine agite les particules qui sont maintenues en suspension dans ledit liquide et on a pu remarquer que la turbulence est généralement suffisamment forte pour provoquer l'entrée de ces particules solides dans la chambre du boîtier renfermant le mécanisme de transmission et en particulier les pignons, les particules solides passant au travers de l'orifice ménagé dans la cloison pour le passage de l'axe de la turbine, bien que cet orifice se trouve en position haute au-dessus de la turbine.

Par conséquent, des particules solides s'introduisent au-delà de la cloison dans la chambre contenant les pignons et, comme il n'existe pratiquement plus de turbulence dans cette chambre, les particules solides peuvent se déposer. De ce fait, les particules solides tombent sous l'effet de la gravité et se logent en particulier dans les dentures des pignons, ce qui provoque une détérioration desdits pignons altérant la transmission de la rotation de la turbine au totalisateur et, par conséquent, la précision du compteur.

Par GB-A-746, on connaît un compteur d'eau dans lequel l'eau entre dans une chambre d'un côté de manière à heurter une section de la circonférence d'une turbine en un ou deux flux ce qui provoque une charge d'un seul côté de la turbine. Le courant traversant affecte le déplacement tourbillonnaire dans la chambre et dévie l'axe de turbulence vers la chambre d'eau morte. Aussi, de manière à protéger l'axe de la turbine contre la pression du flux d'eau et à écarter le flux du centre de la turbine, on a proposé une cloison semi-circulaire au moins en partie autour de l'axe pour dévier le courant d'eau de manière à concentrer le flux sur les pales de la turbine uniquement. Cette cloison peut s'étendre tout autour de l'axe de la turbine au-dessus et au-dessous des pales. De ce fait, la cloison inférieure lorsqu'elle entoure totalement l'axe peut constituer un réceptacle pour des particules solides qui s'y trouvent enfermées comme dans un piège et risquent tôt ou tard de bloquer la turbine. De même, l'intervalle entre la cloison supérieure et l'axe de la turbine n'est nullement mentionné comme étant agence pour éviter une accumulation de particules solides. En, particulier, même si des particules solides auraient pu être empêchées de passer vers la chambre de pignons, de par la forme décrite dans ce brevet, l'axe présentant une partie supérieure formant un bord de retenue sur lequel lesdites particules peuvent se déposer, on aurait une accumulation desdites particules solides autour dudit axe. Un tel compteur favorise donc la rétention des particules solides.

La présente invention a donc pour but de proposer un compteur de liquide à jet unique dans lequel on préserve les pignons du mécanisme de transmission contre une détérioration due aux particules solides abrasives pouvant être contenues dans le liquide mesuré.

A cet effet, la présente invention a pour objet un compteur de liquide à jet unique du type comportant un organe moteur tel qu'une turbine transmettant son mouvement à un totalisateur par l'intermédiaire d'un mécanisme de transmission constitué d'un axe dont une extrémité est solidaire en rotation de l'organe moteur et dont l'autre extrémité est engagée dans une chambre ménagée dans un boîtier renfermant un train de pignons et un axe d'entraînement du totalisateur, au travers d'un orifice ménagé dans la cloison dudit boîtier, ladite extrémité comportant un pignon coopérant avec un pignon monté sur l'axe d'entraînement du totalisateur, comportant des moyens de protection dudit axe, caractérisé en ce que lesdits moyens de protection sont agencés pour empêcher le passage de particules solides contenues dans le liquide au travers de l'orifice ménagé dans la cloison du boîtier vers la chambre renfermant le mécanisme de transmission, en définissant une zone protégée de moindre turbulence entourant ledit axe au voisinage de l'orifice (5) et favorisant la retombée sous l'effet de leur gravité desdites particules qui perdent leur énergie cinétique initiale au fur et à mesure de leur course vers l'orifice de la cloison.

Ainsi, de manière avantageuse, les moyens de protection permettent d'éviter la présence de particules solides au sein de la chambre du boîtier immergée renfermant le mécanisme de transmission de telle sorte que celui-ci est protégé contre une détérioration, en particulier du fait du dépôt de ces particules sur les pignons, en particulier au niveau des dentures, du train de pignons dudit mécanisme de transmission.

On prolonge ainsi avantageusement la durée de vie du compteur de liquide à jet unique en lui garantissant en outre une plus grande fiabilité quant à la précision des mesures effectuées.

De préférence, le totalisateur est hors d'eau, c'est-à-dire qu'il est porté par le boîtier et séparé de celui-ci par au moins une cloison. De préférence, l'axe d'entraînement dudit totalisateur du mécanisme de transmission entraîne en rotation un axe du totalisateur par transmission magnétique au travers de la cloison, ledit axe d'entraînement comportant, à son extrémité opposée à celle portant le pignon coopérant avec le pignon porté par l'axe de l'organe moteur, au moins un aimant accouplé à un aimant monté sur l'axe du totalisateur.

Lesdits moyens définissent donc une zone de moindre turbulence dans la chambre de mesure du compteur entourant l'axe du mécanisme de transmission relié à l'organe moteur et des particules s'engageant dans ladite zone ne subissent plus l'influence des turbulences du liquide régnant dans la chambre de mesure où est disposée la turbine. Les particules perdent leur énergie cinétique initiale même si celle-ci était relativement élevée de manière à retomber sous l'effet de leur gravité hors de cette zone dans la zone de turbulence où elles sont entraînées par le flux de liquide.

De préférence, lesdits moyens de protection sont constitués par une jupe cylindrique ménagée, à la périphérie de l'orifice de la cloison du boîtier, en saillie vers l'organe moteur, et entourant entièrement ledit axe de manière à délimiter la zone protégée de moindre turbulence sensiblement sur l'ensemble de la longueur dudit axe entre l'organe moteur et la cloison du boîtier.

De préférence, la face intérieure de la jupe présente au moins une barrette longitudinale en saillie radiale améliorant encore le freinage du mouvement rotatif du liquide à l'intérieur de la jupe, ce qui permet de diminuer d'autant la vitesse résiduelle de particules.

De préférence, la turbine en tant qu'organe moteur présente un moyeu solidaire de la turbine en sa partie supérieure fixe dans la turbine et dans lequel l'axe est monté solidaire en rotation, ledit moyeu s'étendant depuis la turbine jusqu'à l'orifice de la cloison et présentant, de préférence, une section s'élargissant depuis l'orifice de la cloison vers la turbine, au moins en regard de la jupe. Cette forme particulière du moyeu définit avec la jupe cylindrique une zone de moindre turbulence dont la forme favorise la retombée des particules qui ne rencontrent ainsi aucun point de retenue dans ladite zone. De préférence, le moyeu est de forme conique.

On décrira maintenant plus en détail un exemple de réalisation de l'invention en référence au dessin en annexe dans lequel :
la figure 1 représente une vue en perspective éclatée d'un compteur selon l'état de la technique;
la figure 2 représente une vue en perspective d'un compteur selon l'invention ; ;
la figure 3 représente une vue en perspective de la cloison d'un compteur selon la figure 2 ; et
la figure 4 représente une vue en coupe du compteur selon la figure 2.

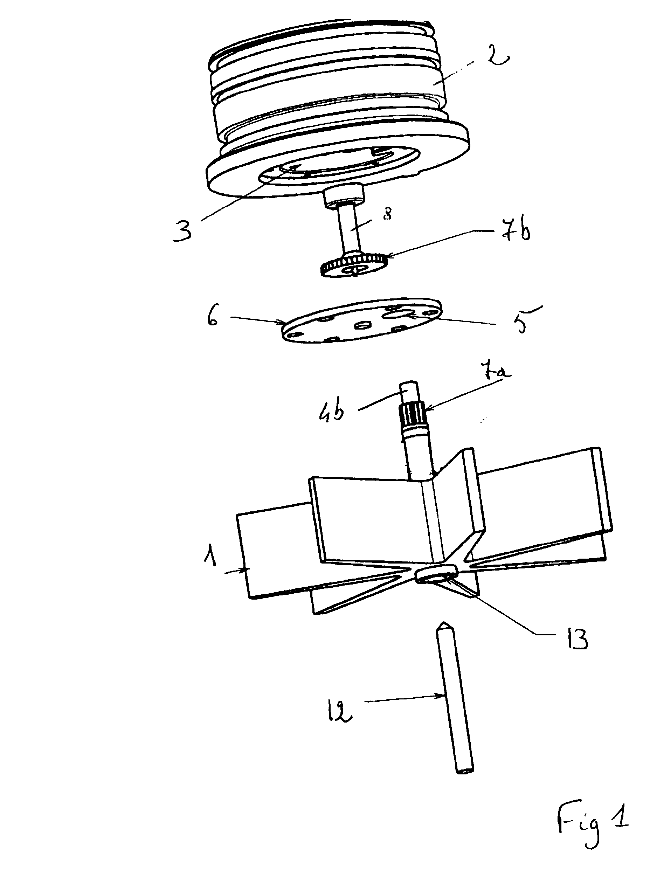

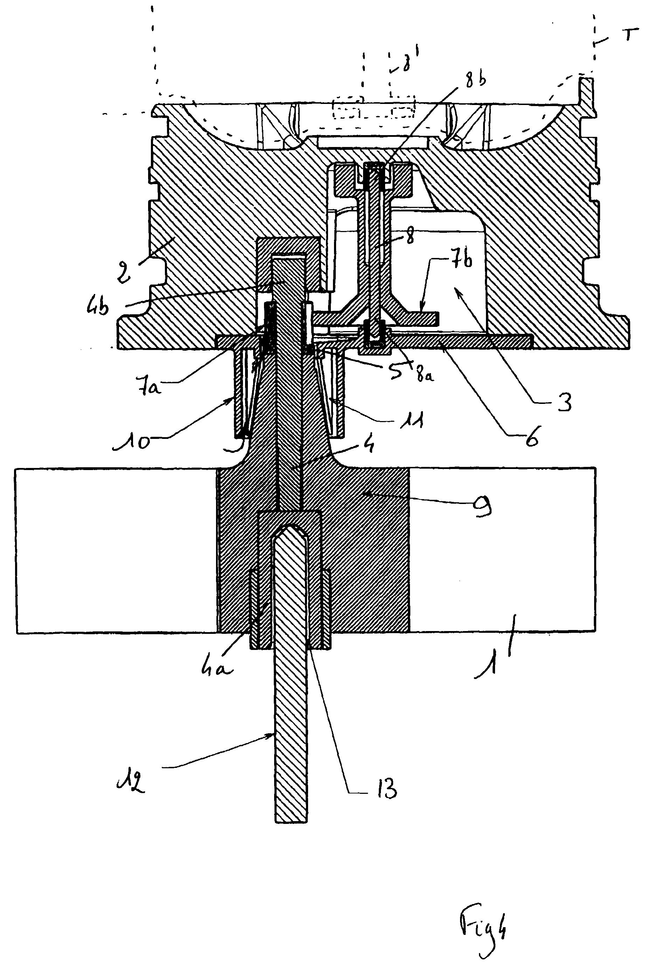

Un compteur de liquide à jet unique selon l'invention est similaire à un compteur de l'état de la technique représenté à la figure 1, on utilise les mêmes références numériques pour les parties identiques. Un tel compteur comporte un organe moteur tel qu'une turbine 1 ou une hélice entraînant un totalisateur. Le corps (non représenté) du compteur, de préférence cylindrique à section circulaire, comporte une zone de passage du liquide à mesurer appelée chambre de mesure dans laquelle est logée, dans l'axe de déplacement du liquide, la turbine 1, un boîtier 2 étant logé dans une des parois du corps du compteur au-dessus de la turbine 1 et portant le totalisateur T qui se trouve hors d'eau (représenté en pointillés à la figure 4).

La turbine 1 est disposée dans le passage d'un liquide tel que de l'eau et est frappée par le flux d'eau en un seul jet pour mesurer le volume d'eau s'écoulant au travers du compteur, et le totalisateur T est disposé au-dessus du boîtier et donc de ladite turbine 1, celle-ci étant guidée en rotation par un axe 12 situé dans la partie inférieure du corps du compteur et engagé dans un alésage 13 de la turbine 1.

Sous l'effet du jet d'eau, la turbine 1 est entraînée en rotation et transmet son mouvement au totalisateur T par l'intermédiaire d'un mécanisme de transmission logé au moins en partie dans une chambre 3 du boîtier 2. Comme cela est visible à la figure 4, le totalisateur T porté par le boîtier 2 et séparé de celui-ci au moins par la cloison dudit boîtier 2 est hors d'eau. Ce mécanisme de transmission comporte un axe 4 dont une extrémité 4a est solidaire en rotation de la turbine 1 et dont l'autre extrémité 4b est engagée, au travers d'un orifice 5 ménagé dans une cloison 6 du boîtier 2, dans la chambre 3, un train de pignons 7a, 7b et un axe d'entraînement 8 du totalisateur T. L'axe 4 porte un pignon 7a du train de pignons coopérant avec un pignon 7b du train de pignons porté à une extrémité 8a de l'axe 8 d'entraînement du totalisateur T. L'entraînement du totalisateur T est réalisé par transmission magnétique, ledit axe 8 portant au moins un aimant à son autre extrémité 8b, ledit aimant coopérant avec un aimant monté sur un axe 8' du totalisateur T de manière à entraîner en rotation ledit axe 8' par accouplement magnétique, au travers de la cloison du boîtier 2, et entraîner en rotation un autre train de pignons au niveau dudit totalisateur T (le totalisateur T étant d'un type connu en soi, il ne fait pas l'objet d'une description plus détaillée).

Comme on peut le voir à la figure 1 représentant un compteur de l'état de la technique, l'eau passant au travers de l'orifice 5 immerge également le mécanisme de transmission logé dans la chambre 3. De ce fait, des particules solides telles que du sable contenues dans l'eau peuvent également entrer par ledit orifice 5 dans la chambre 3 renfermant le train de pignons 7a, 7b du mécanisme de transmission et se loger au niveau des dentures des pignons 7a, 7b.

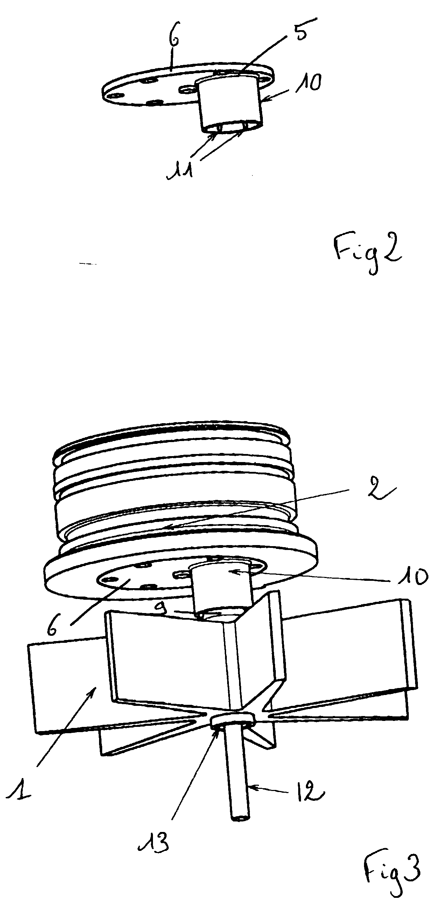

Le compteur selon l'invention représenté à la figure 2 comporte des moyens de protection contre l'entrée des particules solides dans la chambre 3. Ces moyens sont constitués par une jupe cylindrique 10 s'étendant en saillie à la périphérie de l'orifice 5 de la cloison 6 en direction de la turbine 1 (voir les figures 2 et 3) sensiblement sur toute la longueur de l'axe entre la cloison 6 et la turbine 1 mais non complètement, ce qui laisse un passage à l'eau et donc aux particules en suspension dans l'eau.

De préférence, la turbine 1 présente un moyeu 9 solidaire de la turbine 1 en sa partie supérieure et fixe dans la turbine 1 et dans lequel l'axe 4 est monté solidaire en rotation, ledit moyeu 9 de forme conique s'étendant de préférence de sa partie la plus grande au niveau de la turbine en se rétrécissant jusqu'à l'orifice 5 de la cloison 6.

Cette jupe cylindrique 10 définit donc dans l'espace dans lequel est logée la turbine 1, encore appelé chambre de mesure, une zone protégée de moindre turbulence autour de l'axe 4 et plus précisément du moyeu 9 reliant la turbine 1 au boîtier 2.

En effet, la jupe cylindrique 10 forme un conduit définissant cette zone de moindre turbulence autour du moyeu 9, dans lequel peut s'engager l'eau contenant des particules en suspension. Celles-ci du fait de fortes turbulences existant dans la chambre de mesure du fait de l'écoulement de l'eau et du mouvement des pales de la turbine 10, présentent une énergie cinétique importante mais, une fois dans ce conduit, elles ne sont plus soumises aux turbulences et elles doivent remonter le long de ce conduit jusqu'à l'orifice 5 pour accéder à la chambre 3 renfermant les pignons 7a, 7b.

De ce fait, elles perdent leur énergie cinétique et retombent sous l'effet de la gravité en dehors dudit conduit le long du moyeu 9 qui favorise leur évacuation.

De préférence, la face intérieure de la jupe 10 présente des barrettes longitudinales 11 en saillie radiale permettant de freiner le mouvement rotatif de l'eau à l'intérieur du conduit défini par la jupe 10 et donc de réduire la vitesse résiduelle des particules. Cette jupe 10 peut être réalisée une seule pièce avec la cloison 6.

## Revendications

1. Compteur de liquide à jet unique du type comportant un organe moteur tel qu'une turbine (1) transmettant son mouvement à un totalisateur (T) par l'intermédiaire d'un mécanisme de transmission constitué d'un axe (4) dont une extrémité (4a) est solidaire en rotation de l'organe moteur (1) et dont l'autre extrémité (4b) est engagée dans une chambre (3), ménagée dans un boîtier (2) renfermant un train de pignons (7a, 7b) et un axe d'entraînement (8) du totalisateur (T), au travers d'un orifice (5) ménagé dans la cloison (6) dudit boîtier (2), ladite extrémité (4b) comportant un pignon (7a) coopérant avec un pignon (7b) monté sur l'axe (8) d'entraînement du totalisateur (T), comportant des moyens de protection (10) dudit axe (4), caractérisé en ce que lesdits moyens de protection sont agencés pour empêcher le passage de particules solides contenues dans le liquide au travers de l'orifice (5) ménagé dans la cloison (6) du boîtier (2) vers la chambre (3) renfermant le mécanisme de transmission, en définissant une zone protégée de moindre turbulence entourant ledit axe (4) au voisinage de l'orifice (5) et favorisant la retombée sous l'effet de leur gravité desdites particules qui perdent leur énergie cinétique initiale au fur et à mesure de leur course vers l'orifice (5) de la cloison (6).

2. Compteur selon la revendication 1,
caractérisé en ce que lesdits moyens de protection sont constitués par une jupe cylindrique (10) ménagée, à la périphérie de l'orifice (5) de la cloison (6) du boîtier (2), en saillie vers l'organe moteur (1), et entourant ledit axe (4) de manière à délimiter une zone protégée de moindre turbulence sensiblement sur l'ensemble de la longueur dudit axe (4) entre la cloison (6) du boîtier (2) et l'organe moteur (1).

3. Compteur selon la revendication 2,
caractérisé en ce que la face intérieure de la jupe (10) présente au moins une barrette longitudinale (11) en saillie radiale améliorant encore le freinage du mouvement rotatif du liquide à l'intérieur de la jupe (10).

4. Compteur selon l'une des revendications 1 à 3,
caractérisé en ce qu'une turbine (1) en tant qu'organe moteur présente un moyeu (9) solidaire de la turbine (1) en sa partie supérieure fixe dans la turbine et dans lequel l'axe (4) est monté solidaire en rotation.

5. Compteur selon la revendication 4,
caractérisé en ce que ledit moyeu (9) s'étend depuis la turbine jusqu'à l'orifice (5) de la cloison (6).

6. Compteur selon l'une des revendications 4 et 5,
caractérisé en ce que ledit moyeu (9) présente une section s'élargissant depuis l'orifice (5) de la cloison (6) vers la turbine, au moins en regard de la jupe (10).

7. Compteur selon l'une des revendications 4 à 6,
caractérisé en ce que ledit moyeu (9) est de forme conique.

8. Compteur selon l'une des revendications 1 à 7,
caractérisé en ce que le totalisateur (T) est hors d'eau, c'est-à-dire qu'il est porté par le boîtier (2) et séparé de celui-ci par au moins une cloison, l'axe d'entraînement (8) dudit totalisateur (T) du mécanisme de transmission entraînant en rotation un axe (8') du totalisateur (T) par transmission magnétique à travers la cloison, ledit axe d'entraînement (8) comportant, à son extrémité opposée à celle portant le pignon (7b) coopérant avec le pignon (7a) porté par l'axe (4) de l'organe moteur (1), au moins un aimant accouplé à un aimant monté sur l'axe (8') du totalisateur.
